# EUROPEAN PATENT APPLICATION

(11) **EP 4 645 976 A1**
(43) Date of publication of application: **05.11.2025**
(21) Application number: 22969625.7
(22) Date of filing: 28.12.2022
(51) Int. Cl.: H04W 68/00

(54) **PAGING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/143066
(87) International publication number: WO 2024/138474

(57) **Abstract**

Embodiments of the present disclosure provide a paging method and apparatus, a communication device, and a storage medium. The method comprises: on the basis of the length of a configured eDRX paging cycle and a receiving result in respect of capability indication information, determining an operation mode for listening for a radio access network (RAN) paging message, wherein the capability indication information comprises at least one of the following: first capability indication information used for indicating that a base station supports listening for a RAN paging message on the basis of an eDRX paging cycle greater than a cycle threshold; and second capability indication information used for indicating that the base station supports listening for a RAN paging message on the basis of an eDRX paging cycle. Compared with a situation where a base station supports listening for a RAN paging message on the basis of an eDRX paging cycle greater than a cycle threshold and where a terminal is not sure how to listen for a RAN paging message, the method can adapt to different eDRX paging cycles, improving the reliability of eDRX communication.

## Description

### TECHNICAL FIELD

The present disclosure relates to, but is not limited to, a field of wireless communication technology, and specifically to a paging method, a paging apparatus, a communication device and a storage medium.

### BACKGROUND

In a wireless communication system, a terminal balances low power consumption and certain delay requirements of services. In each extended discontinuous reception (eDRX) cycle, the terminal may receive downlink data only in a paging time window (PTW) configured, while the terminal remains in a sleep state and does not receive the downlink data for the rest of the time. This mode may achieve a trade-off between a downlink service delay and a power consumption, such as in a remote gas shut-off service. In the related art, the terminal may monitor a paging message based on a configured eDRX parameter. How the terminal performs paging monitoring when different eDRX parameters are configured is a question that needs to take into consideration.

### SUMMARY

Embodiments of the present disclosure provide a paging method, a paging apparatus, a communication device and a storage medium.

According to a first aspect of the embodiments of the present disclosure, a paging method is provided, performed by a terminal, including:
determining an operation mode for monitoring a paging message of a radio access network (RAN) based on a size of an extended discontinuous reception (eDRX) paging cycle configured and a reception result of capability indication information,
in which the capability indication information includes at least one of:
   first capability indication information that indicates that a base station supports monitoring the paging message of the RAN based on an eDRX paging cycle longer than a cycle threshold; or
   second capability indication information that indicates that a base station supports monitoring the paging message of the RAN based on the eDRX paging cycle.

In an embodiment, the method further includes: receiving the first capability indication information sent by the base station.

In an embodiment, receiving the first capability indication information sent by the base station includes: receiving the first capability indication information sent by the base station via a system message.

In an embodiment, determining the operation mode for monitoring the paging message of the RAN based on the size of the eDRX paging cycle configured and the reception result of the capability indication information includes at least one of:
in response to the eDRX paging cycle being longer than the cycle threshold and receiving the first capability indication information, determining that the terminal is enabled to perform RAN paging monitoring based on the eDRX paging cycle longer than the cycle threshold;
in response to the eDRX paging cycle being longer than the cycle threshold and not receiving the first capability indication information, determining that the terminal is not enabled to perform RAN paging monitoring based on the eDRX paging cycle;
in response to the eDRX paging cycle being less than or equal to the cycle threshold and receiving the second capability indication information, determining that the terminal is enabled to perform RAN paging monitoring based on the eDRX paging cycle; or
in response to the eDRX paging cycle being longer than the cycle threshold, not receiving the first capability indication information and receiving the second capability indication information, determining that the terminal is enabled to perform RAN paging monitoring based on a predetermined eDRX paging cycle.

According to a second aspect of the embodiments of the present disclosure, a paging method is provided, performed by a base station, including:
sending first capability indication information to a terminal,
in which the first capability indication information indicates that the base station supports an eDRX paging cycle longer than a cycle threshold, and the eDRX paging cycle is a preset eDRX parameter configured by the base station for the terminal.

In an embodiment, sending the first capability indication information to the terminal includes: sending the first capability indication information to the terminal via a system message.

In an embodiment, the method further includes: in response to configuring second capability indication information, configuring the first capability indication information, in which the second capability indication information indicates that the base station supports monitoring a paging message of an RAN using the eDRX paging cycle.

In an embodiment, the method further includes: in response to configuring third capability indication information, configuring the first capability indication information, in which the third capability indication information indicates that the base station supports monitoring a paging message of a core network (CN) using the eDRX paging cycle.

According to a third aspect of the embodiments of the present disclosure, a paging apparatus is provided, including:
a determining module, configured to determine an operation mode for monitoring a paging message of an RAN based on a size of an eDRX paging cycle configured and a reception result of capability indication information,
in which the capability indication information includes at least one of:
   first capability indication information that indicates that a base station supports monitoring the paging message of the RAN based on an eDRX paging cycle longer than a cycle threshold; or
   second capability indication information that indicates that a base station supports monitoring the paging message of the RAN based on the eDRX paging cycle.

According to a fourth aspect of the embodiments of the present disclosure, a paging apparatus is provided, including:
a sending module, configured to send first capability indication information to a terminal,
in which the first capability indication information indicates that a base station supports an eDRX paging cycle longer than a cycle threshold, and the eDRX paging cycle is a preset eDRX parameter configured by the base station for the terminal.

According to a fifth aspect of the embodiments of the present disclosure, a communication device is provided, including: a processor; and a memory for storing instructions executable by the processor, in which the processor is configured to implement the method in any one of the embodiments of the present disclosure when the executable instructions are executed.

According to a sixth aspect of the embodiments of the present disclosure, a computer storage medium for storing a computer-executable program, in which when the executable program is executed by a processor, the method in any one of the embodiments of the present disclosure is implemented.

In the embodiments of the present disclosure, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. Since the terminal may determine the operation mode for monitoring the paging message of the RAN based on the size of the eDRX paging cycle configured and the reception result of the capability indication information, the terminal may also provide an operation mechanism for monitoring the paging message of the RAN when the base station supports the paging message based on the eDRX paging cycle longer than the cycle threshold. Compared with a situation that when the base station supports the paging message of the RAN based on the eDRX paging cycle longer than the cycle threshold, the terminal cannot determine the operation of how to monitor the paging message of the RAN, the disclosure improves a monitoring mechanism of the paging message, adapts to different eDRX paging cycles, and improves a reliability of an eDRX communication.

### BRIEF DESCRIPTION OF THE DRAWINGS

FIG. 1 is a schematic diagram of a structure of a wireless communication system according to an exemplary embodiment.
FIG. 2 is a schematic diagram of a discontinuous reception (DRX) according to an exemplary embodiment.
FIG. 3 is a flowchart of a negotiation process between a terminal and a base station according to an exemplary embodiment.
FIG. 4 is a flowchart of a paging method according to an exemplary embodiment.
FIG. 5 is a flowchart of a paging method according to an exemplary embodiment.
FIG. 6 is a flowchart of a paging method according to an exemplary embodiment.
FIG. 7 is a flowchart of a paging method according to an exemplary embodiment.
FIG. 8 is a flowchart of a paging method according to an exemplary embodiment.
FIG. 9 is a flowchart of a paging method according to an exemplary embodiment.
FIG. 10 is a flowchart of a paging method according to an exemplary embodiment.
FIG. 11 is a schematic diagram of a paging apparatus according to an exemplary embodiment.
FIG. 12 is a schematic diagram of a paging apparatus according to an exemplary embodiment.
FIG. 13 is a schematic diagram of a structure of a terminal according to an exemplary embodiment.
FIG. 14 is a block diagram of a base station according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the embodiments of the present disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It should be understood that although the terms first, second, third, etc. may be used to describe various information in embodiments of the present disclosure, such information should not be limited to these terms. These terms are used only to distinguish information in the same type from one another. For example, without departing from the scope of embodiments of the present disclosure, first information may also be referred to as second information, and similarly, the second information may be referred to as the first information. Depending on the context, the word "if" used here may be interpreted as "when", "upon", or "in response to determining".

For a purpose of brevity and ease of understanding, terms "longer than" or "less than" are used in the present disclosure to represent a size relationship. However, for those skilled in the art, it may be understood that the term "longer than" also covers a meaning of "longer than or equal to" and the term "less than" also covers a meaning of "less than or equal to".

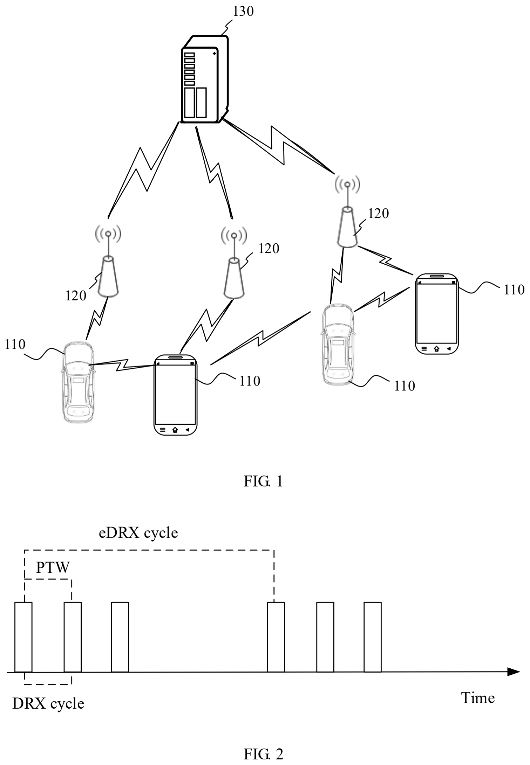

Please refer to FIG. 1, FIG. 1 is a schematic diagram of a structure of a wireless communication system according to an embodiment of the disclosure. As shown in FIG. 1, the wireless communication system is a communication system based on the mobile communication technology, and the wireless communication system may include: a plurality of user equipment (UE) 110 and a plurality of base stations 120.

The UE 110 may be a device that provides voice and/or data connectivity to a user. The UE 110 may communicate with one or more core networks (CN) via a radio access network (RAN). The UE 110 may be an Internet of Things (IoT) UE, such as a sensor device, a mobile phone, and a computer with the IoT UE. For example, the UE 110 may be a fixed, portable, pocket, handheld, computer built-in or vehicle-mounted device, for example, a station (STA), a subscriber unit, a subscriber station, a mobile station, a mobile, a remote station, an access point, a remote terminal, an access terminal, a user terminal, a user agent, a user device, or a user equipment. Or, the UE 110 may be a device for an unmanned aerial vehicle (UAV). Or, the UE 110 may also be a vehicle-mounted device, for example, a vehicle computer with a wireless communication function, or a wireless communication device externally coupled to the vehicle computer. Or, the UE 110 may be a roadside device, such as a street lamp, a signal lamp or other roadside devices with a wireless communication function.

The base station 120 may be a network-side device in a wireless communication system. The wireless communication system may be a 4th generation mobile communication technology (4G) system, also known as a long term evolution (LTE) system; or, the wireless communication system may also be a 5th generation mobile communication technology (5G) system, also known as a new radio (NR) system or a 5G NR system; or, the wireless communication system may also be a next generation system of the 5G system. An access network in the 5G system may be called as a new generation-radio access network (NG-RAN).

The base station 120 may be an evolved Node B (eNB) in the 4G system, or a next generation node B (gNB) that adopts a centralized distributed architecture in the 5G system. When the base station 120 adopts the centralized distributed architecture, the base station 120 usually includes a central unit (CU) and at least two distributed units (DU). The CU is provided with a protocol stack of a packet data convergence protocol (PDCP) layer, a radio link control (RLC) layer, and a media access control (MAC) layer. The DU is provided with a protocol stack of a physical (PHY) layer. The embodiments of the present disclosure do not limit the specific implementation of the base station 120.

A wireless connection may be set up between the base station 120 and the UE 110 via a radio interface. In different implementations, the radio interface may be a radio interface based on a 4G standard; or, the radio interface may be a radio interface based on a 5G standard, for example, the radio interface may be a new radio interface; or, the radio interface may also be a radio interface based on a next generation of a mobile communication network technology standard based on 5G.

In some embodiments, an end to end (E2E) connection may also be established between the UEs 110, for example, a vehicle to vehicle (V2V) communication, a vehicle to infrastructure (V2I) communication, a vehicle to pedestrian (V2P) communication in a vehicle to everything (V2X) communication.

Here, the UE may be considered as a terminal of the following embodiments.

In some embodiments, the wireless communication system may also include a network management device 130.

The plurality of base stations 120 are connected to the network management device 130. The network management device may be a CN device in the wireless communication system, for example, the network management device 130 may be a mobility management entity (MME) in an evolved packet core (EPC). Or, the network management device may be other CN devices, such as a serving GateWay (SGW), a public data network GateWay (PGW), and a policy and charging rules function (PCRF), or a home subscriber server (HSS). The implementation form of the network management device 130 is not limited in embodiments of the present disclosure.

In order to facilitate the understanding of those skilled in the art, a plurality of implementations is listed in embodiments of the present disclosure to clearly illustrate the technical solution of embodiments of the present disclosure. Of course, those skilled in the art may understand that the plurality of implementations in embodiments of the present disclosure may be executed individually or in combination with the method of other embodiments in the present disclosure, or individually or in combination with some methods in other related arts, which is not limited in embodiments of the present disclosure.

In order to better understand the embodiments of the present disclosure, relevant scenarios of paging are described below.

In an embodiment, please refer to FIG. 2. In each extended discontinuous reception (eDRX) cycle, there is a paging time window (PTW). The terminal monitors a paging channel in accordance with a DRX cycle (the DRX cycle time is short, and it may be considered that the terminal is not in a sleep mode and is always reachable) within the PTW to receive downlink data, and the terminal is in the sleep mode for the rest of the time. In an eDRX mode, it is considered that the terminal is reachable at any time, but the delay is large. The delay depends on an eDRX cycle configuration. Then, the terminal may strike a balance between a low power consumption and a delay.

It needs to be noted that the terminal and the CN need to negotiate following parameters:
T_{eDRX,H}: eDRX cycle; and
L: length of the PTW.

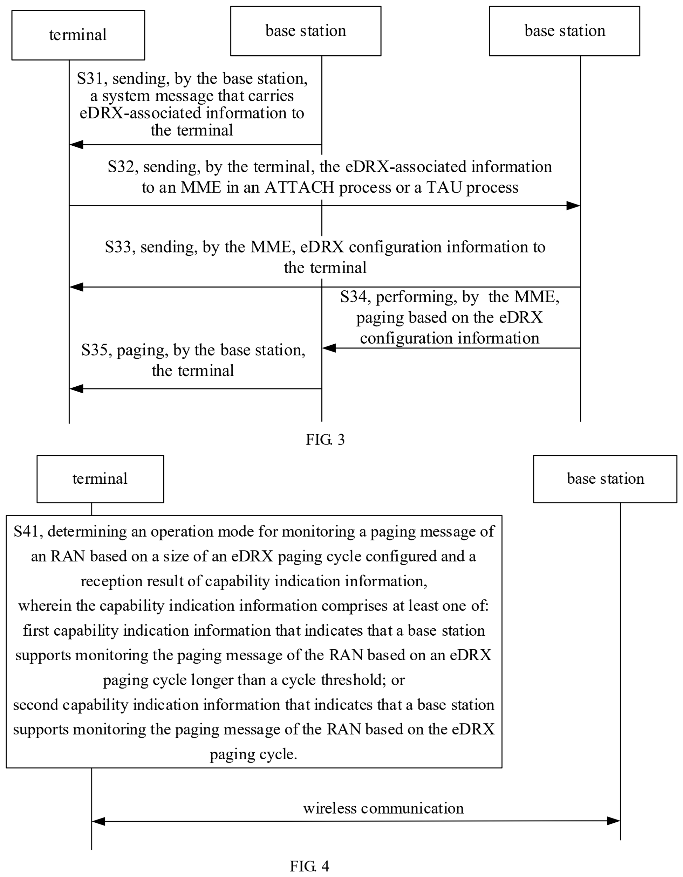

In an embodiment, please refer to FIG. 3, a negotiation process includes S31 to S35.

At S31, the base station sends a system message to the terminal, in which the system message carries eDRX-associated information.

At S32, the terminal sends the eDRX-associated information to an MME in an ATTACH process or a tracking area update (TAU) process.

At S33, the MME sends eDRX configuration information to the terminal.

At S34, the MME performs paging based on the eDRX configuration information.

At S35, the base station pages the terminal.

In an embodiment, in a new radio (NR), a radio resource control (RRC) inactive state is introduced. At the time, the terminal not only needs to receive paging from the CN, but also needs to receive paging from the RAN.

In an embodiment, the RAN may assign an inactive mode eDRX cycle to the terminal.

In an embodiment, the RAN may assign a length of the PTW to the terminal, and a starting location of the PTW is the same as a starting location of the PTW assigned by the CN.

In an embodiment, the CN assigns a first eDRX parameter to the terminal, that is, an idle mode eDRX parameter or an eDRX parameter for CN paging, and the base station assigns a second eDRX parameter to the terminal, that is, an inactive mode eDRX parameter or an extended DRX parameter for RAN paging.

In an embodiment, for the terminal, the base station usually explicitly indicates whether to support an idle mode eDRX (for example, indicated by a first identifier) or an inactive mode eDRX (for example, indicated by a second identifier, and the second identifier needs to be configured only when the first identifier is configured or enabled).

In an embodiment, whether the terminal may use the first eDRX parameter (that is, the eDRX for CN paging) depends on whether a network configures the first eDRX parameter and the first identifier for the terminal. Whether the terminal may use the second eDRX parameter (that is, the eDRX for RAN paging) depends on whether the network configures the second eDRX parameter and the second identifier for the terminal.

In an embodiment, only a behavior of the terminal with a paging cycle having less than or equal to 1024 radio frames (that is, 10.24s) in the second eDRX parameter is standardized. However, a behavior of the terminal with a paging cycle having longer/greater than 1024 radio frames in the second eDRX parameter is not standardized.

As shown in FIG. 4, the present embodiment provides a paging method, performed by a terminal, including S41.

At S41, an operation mode for monitoring a paging message of an RAN is determined based on a size of an eDRX paging cycle configured and a reception result of capability indication information,
in which the capability indication information includes at least one of:
first capability indication information that indicates that a base station supports monitoring the paging message of the RAN based on an eDRX paging cycle longer than a cycle threshold; or
second capability indication information that indicates that a base station supports monitoring the paging message of the RAN based on the eDRX paging cycle.

In the embodiments of the present disclosure, the operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle.

In the embodiments of the present disclosure, an operation for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle.

The terminal in the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a reduced capability (RedCap) terminal or an NR terminal in a predefined version (for example, an NR terminal in version R17).

The base station in the present disclosure may be various types of base stations, for example, a base station of a 3th generation mobile communication (3G) network, a base station of a 4th generation mobile communication (4G) network, a base station of a 5th generation mobile communication (5G) network or other evolved base stations.

In an embodiment, the CN may configure the first eDRX parameter for the terminal, which may be an idle mode eDRX parameter (i.e., idle mode eDRX) or an extended DRX parameter for CN paging (i.e., eDRX for CN paging). The base station may configure the second eDRX parameter for the terminal, which may be an inactive mode eDRX parameter (i.e., inactive mode eDRX) or an extended DRX parameter for RAN paging (i.e., eDRX for RAN paging). The preset eDRX parameter in the present disclosure is the second eDRX parameter. The preset eDRX parameter may include an eDRX paging cycle for paging. In an embodiment, the second capability indication information may carry a second identifier, and the second identifier indicates that the base station supports monitoring the paging message of the RAN based on the eDRX paging cycle.

In an embodiment, the first capability indication information needs to be configured based on second capability information, that is, only if the network enables the second capability information, the network may configure or enable the first capability indication information.

In an embodiment, the first capability indication information needs to be configured based on capability information other than the second capability information, that is, only if the network enables and supports the capability information that terminal monitors CN paging using the eDRX, the network may configure or enable the first capability indication information.

In an embodiment, the first capability indication information may carry a third identifier, which indicates that the base station supports monitoring the paging message of the RAN based on the eDRX paging cycle longer than the cycle threshold.

In an embodiment, the operation mode for monitoring the paging message of the RAN is determined based on the size of the eDRX paging cycle configured and a reception result of the first capability indication information, in which the first capability indication information indicates that the base station supports monitoring the paging message of the RAN based on the eDRX paging cycle longer than the cycle threshold.

In an embodiment, the first capability indication information sent by the base station is received. The operation mode for monitoring the paging message of the RAN is determined based on the size of the eDRX paging cycle configured in a preset eDRX parameter and a reception result of the first capability indication information, in which the first capability indication information indicates that the base station supports monitoring the paging message of the RAN based on the eDRX paging cycle longer than the cycle threshold.

In an embodiment, the first capability indication information sent by the base station is received via a system message. The operation mode for monitoring the paging message of the RAN is determined based on the size of the eDRX paging cycle configured in a preset eDRX parameter and a reception result of the first capability indication information, in which the first capability indication information indicates that the base station supports monitoring the paging message of the RAN based on the eDRX paging cycle longer than the cycle threshold.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being longer than the cycle threshold and receiving the first capability indication information, it is determined that the terminal is enabled to perform RAN paging monitoring based on the eDRX paging cycle.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to determining that the terminal is enabled to monitor the paging message of the RAN based on the eDRX paging cycle longer than the cycle threshold, a paging message of the CN is monitored within a PTW of the first eDRX parameter.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to determining that the terminal is enabled to monitor the paging message of the RAN based on the eDRX paging cycle, a paging message of the access network is monitored within a PTW of the preset eDRX parameter (that is, the second eDRX parameter).

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being longer than the cycle threshold and receiving the first capability indication information, it is determined that the RAN paging monitoring may be performed based on the eDRX paging cycle longer than the cycle threshold or T_{eDRX,RAN} may be set to be longer than N radio frames, where N may be 1024.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to not receiving the first capability indication information, it is determined that the RAN paging monitoring may not be performed based on the eDRX paging cycle longer than the cycle threshold.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being longer than the cycle threshold and not receiving the first capability indication information, it is determined that the RAN paging monitoring may not be performed based on the eDRX paging cycle.

The fact that the RAN paging monitoring may not be performed based on the eDRX paging cycle means that the second eDRX parameter configured is invalid.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being less than or equal to the cycle threshold and receiving the second capability indication information, it is determined that the RAN paging monitoring may be performed based on the eDRX paging cycle.

In an embodiment, the operation mode for monitoring the paging message of the RAN is determined based on the size of the eDRX paging cycle configured and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being longer than the cycle threshold, not receiving the first capability indication information and receiving the second capability indication information, it is determined that the RAN paging monitoring may be performed based on a preset eDRX paging cycle. The preset eDRX paging cycle may be 10.24s, 5.12s, or 2.56s.

In the embodiments of the present disclosure, the operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. Since the terminal may determine the operation mode for monitoring the paging message of the RAN based on the size of the eDRX paging cycle configured in the preset eDRX parameter and the reception result of the capability indication information, the terminal may also provide an operation mechanism for monitoring the paging message of the RAN when the base station supports the paging message of the RAN based on the eDRX paging cycle longer than the cycle threshold. Compared with a situation that when the base station supports the paging message of the RAN based on the eDRX paging cycle longer than the cycle threshold, the terminal cannot determine the operation of how to monitor the paging message of the RAN, the disclosure improves a monitoring mechanism of the paging message, adapts to different eDRX paging cycles, and improves a reliability of an eDRX communication.

It needs to be noted that those skilled in the art may understand that the method in embodiments of the present disclosure may be executed alone, or together with some methods in embodiments of the present disclosure or some methods in the related art.

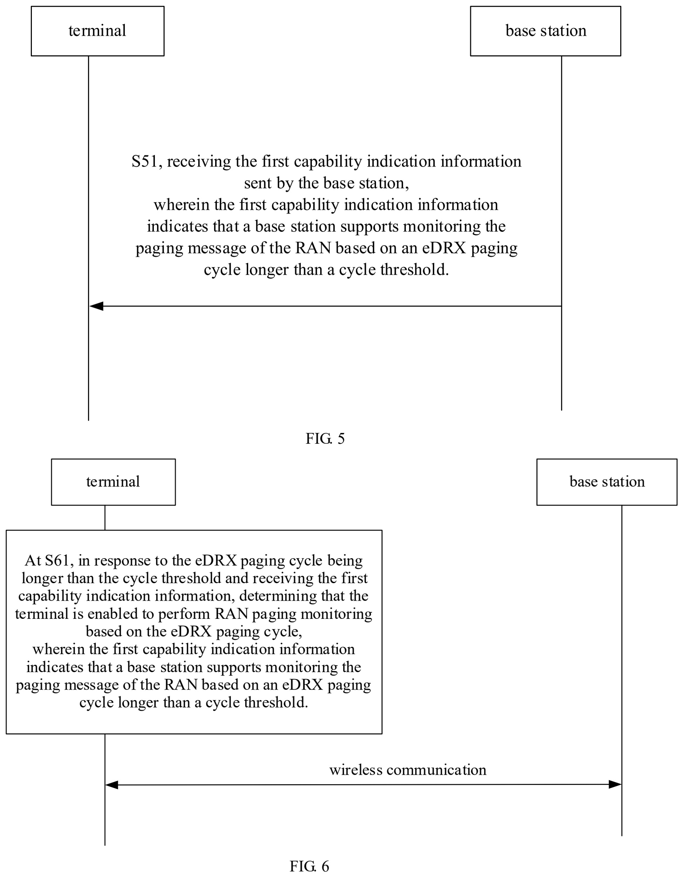

As shown in FIG. 5, the present embodiment provides a paging method, performed by a terminal, including S51.

At S51, the first capability indication information sent by the base station is received.

The first capability indication information indicates that a base station supports monitoring the paging message of the RAN based on an eDRX paging cycle longer than a cycle threshold.

In an embodiment, the first capability indication information sent by the base station is received. The operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle.

In an embodiment, the first capability indication information sent by the base station is received via a system message. The operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle.

In an embodiment, the first capability indication information sent by the base station is received. The operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. In response to the eDRX paging cycle being longer than the cycle threshold and receiving the first capability indication information, it is determined that the terminal is enabled to perform RAN paging monitoring based on the eDRX paging cycle. The paging message of the RAN is monitored based on the eDRX paging cycle longer than the cycle threshold.

In an embodiment, the first capability indication information sent by the base station is received. The operation mode for monitoring the paging message of the RAN is determined based on the size of the eDRX paging cycle configured in a preset eDRX parameter and the reception result of the capability indication information, in which the capability indication information includes at least one of: the first capability indication information that indicates that the base station supports monitoring the paging message of the RAN based on the eDRX paging cycle longer than the cycle threshold; or the second capability indication information that indicates that the base station supports monitoring the paging message of the RAN based on the eDRX paging cycle. At least one of the following is performed: in response to the eDRX paging cycle being longer than the cycle threshold and receiving the first capability indication information, determining that the terminal is enabled to perform RAN paging monitoring based on the eDRX paging cycle longer than the cycle threshold; in response to the eDRX paging cycle being longer than the cycle threshold and not receiving the first capability indication information, determining that the terminal is not enabled to perform RAN paging monitoring based on the eDRX paging cycle; in response to the eDRX paging cycle being less than or equal to the cycle threshold and receiving the second capability indication information, determining that the terminal is enabled to perform RAN paging monitoring based on the eDRX paging cycle; or in response to the eDRX paging cycle being longer than the cycle threshold, not receiving the first capability indication information and receiving the second capability indication information, determining that the terminal is enabled to perform RAN paging monitoring based on a predetermined eDRX paging cycle.

It needs to be noted that those skilled in the art may understand that the method in embodiments of the present disclosure may be executed alone, or together with some methods in embodiments of the present disclosure or some methods in the related art.

As shown in FIG. 6, the present embodiment provides a paging method, performed by a terminal, including S61.

At S61, in response to the eDRX paging cycle being longer than the cycle threshold and receiving the first capability indication information, it is determined that the terminal is enabled to perform RAN paging monitoring based on the eDRX paging cycle.

The first capability indication information indicates that a base station supports monitoring the paging message of the RAN based on an eDRX paging cycle longer than a cycle threshold.

In an embodiment, the first capability indication information is received. In response to the eDRX paging cycle being longer than the cycle threshold and receiving the first capability indication information, it is determined that the paging message of the RAN may be monitored based on the eDRX paging cycle. The first capability indication information indicates that the base station supports monitoring the paging message of the RAN based on the eDRX paging cycle longer than the cycle threshold.

It needs to be noted that those skilled in the art may understand that the method in embodiments of the present disclosure may be executed alone, or together with some methods in embodiments of the present disclosure or some methods in the related art.

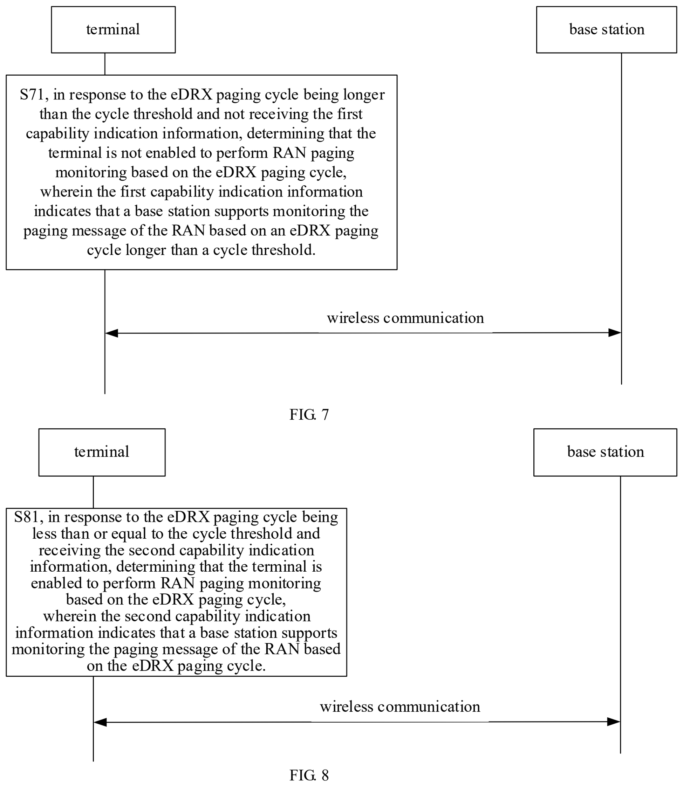

As shown in FIG. 7, the present embodiment provides a paging method, performed by a terminal, including S71.

At S71, in response to the eDRX paging cycle being longer than the cycle threshold and not receiving the first capability indication information, it is determined that the terminal is not enabled to perform RAN paging monitoring based on the eDRX paging cycle.

The first capability indication information indicates that a base station supports monitoring the paging message of the RAN based on an eDRX paging cycle longer than a cycle threshold.

It needs to be noted that those skilled in the art may understand that the method in embodiments of the present disclosure may be executed alone, or together with some methods in embodiments of the present disclosure or some methods in the related art.

As shown in FIG. 8, the present embodiment provides a paging method, performed by a terminal, including S81.

At S81, in response to the eDRX paging cycle being less than or equal to the cycle threshold and receiving the second capability indication information, it is determined that the terminal is enabled to perform RAN paging monitoring based on the eDRX paging cycle.

The second capability indication information indicates that a base station supports monitoring the paging message of the RAN based on the eDRX paging cycle.

It needs to be noted that those skilled in the art may understand that the method in embodiments of the present disclosure may be executed alone, or together with some methods in embodiments of the present disclosure or some methods in the related art.

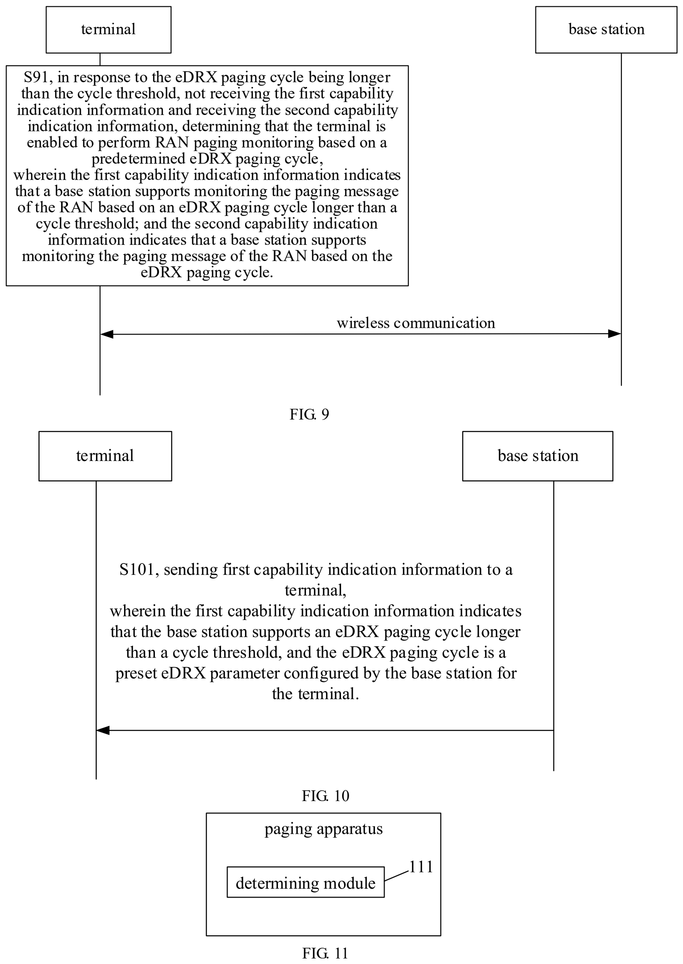

As shown in FIG. 9, the present embodiment provides a paging method, performed by a terminal, including S91.

At S91, in response to the eDRX paging cycle being longer than the cycle threshold, not receiving the first capability indication information and receiving the second capability indication information, it is determined that the terminal is enabled to perform RAN paging monitoring based on a predetermined eDRX paging cycle.

The first capability indication information indicates that a base station supports monitoring the paging message of the RAN based on an eDRX paging cycle longer than a cycle threshold; and the second capability indication information indicates that a base station supports monitoring the paging message of the RAN based on the eDRX paging cycle.

It needs to be noted that those skilled in the art may understand that the method in embodiments of the present disclosure may be executed alone, or together with some methods in embodiments of the present disclosure or some methods in the related art.

As shown in FIG. 10, the present embodiment provides a paging method, performed by a terminal, including S101.

At S101, first capability indication information is sent to a terminal.

The first capability indication information indicates that the base station supports an eDRX paging cycle longer than a cycle threshold, and the eDRX paging cycle is a preset eDRX parameter configured by the base station for the terminal.

The terminal in the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a RedCap terminal or an NR terminal in a predefined version (for example, an NR terminal in version R17).

The base station in the present disclosure may be various types of base stations, for example, a base station of a 3th generation mobile communication (3G) network, a base station of a 4th generation mobile communication (4G) network, a base station of a 5th generation mobile communication (5G) network or other evolved base stations.

In an embodiment, the CN may configure the first eDRX parameter for the terminal, which may be an idle mode eDRX parameter (i.e., idle mode eDRX) or an extended DRX parameter for CN paging (i.e., eDRX for CN paging). The base station may configure the second eDRX parameter for the terminal, which may be an inactive mode eDRX parameter (i.e., inactive mode eDRX) or an extended DRX parameter for RAN paging (i.e., eDRX for RAN paging). The preset eDRX parameter in the present disclosure is the second eDRX parameter. The preset eDRX parameter may include an eDRX paging cycle for paging. In an embodiment, the second capability indication information may carry a second identifier, and the second identifier indicates that the base station supports monitoring the paging message of the RAN based on the eDRX paging cycle.

In an embodiment, the first capability indication information may carry a third identifier, which indicates that the base station supports monitoring the paging message of the RAN based on the eDRX paging cycle longer than the cycle threshold.

In an embodiment, the base station sends the first capability indication information to the terminal. The operation mode for monitoring the paging message of the RAN is determined based on the size of the eDRX paging cycle configured in a preset eDRX parameter and a reception result of the first capability indication information, in which the first capability indication information indicates that the base station supports monitoring the paging message of the RAN based on the eDRX paging cycle longer than the cycle threshold.

In an embodiment, the base station sends the first capability indication information to the terminal via the system message. The operation mode for monitoring the paging message of the RAN is determined based on the size of the eDRX paging cycle configured in a preset eDRX parameter and a reception result of the first capability indication information, in which the first capability indication information indicates that the base station supports monitoring the paging message of the RAN based on the eDRX paging cycle longer than the cycle threshold.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that a base station supports monitoring the paging message of the RAN based on an eDRX paging cycle longer than a cycle threshold; or second capability indication information that indicates that a base station supports monitoring the paging message of the RAN based on the eDRX paging cycle. In response to the eDRX paging cycle being longer than the cycle threshold and receiving the first capability indication information, the terminal determines that the paging message of the RAN may be monitored based on the eDRX paging cycle.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to determining that the paging message of the RAN may be monitored based on the eDRX paging cycle, the terminal monitors a paging message of the CN within a PTW of the first eDRX parameter.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to determining that the paging message of the RAN may be monitored based on the eDRX paging cycle, the terminal monitors a paging message of the CN within a PTW of the preset eDRX parameter (that is, the second eDRX parameter).

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to the eDRX paging cycle being longer than the cycle threshold and receiving the first capability indication information, the terminal determines that RAN paging monitoring may be performed based on the eDRX paging cycle longer than the cycle threshold or T_{eDRX,RAN} may be set to be longer than N radio frames, where N may be 1024.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to not receiving the first capability indication information, the terminal determines that RAN paging monitoring may not be performed based on the eDRX paging cycle longer than the cycle threshold.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to the eDRX paging cycle being longer than the cycle threshold and not receiving the first capability indication information, the terminal determines that RAN paging monitoring may not be performed based on the eDRX paging cycle.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to the eDRX paging cycle being less than or equal to the cycle threshold and receiving the second capability indication information, the terminal determines that RAN paging monitoring may be performed based on the eDRX paging cycle.

In an embodiment, the base station sends the first capability indication information to the terminal. The terminal determines the operation mode for monitoring the paging message of the RAN based on the size of the eDRX paging cycle configured in the preset eDRX parameter and the reception result of the capability indication information, in which the capability indication information includes at least one of: first capability indication information that indicates that the base station supports monitoring the paging message of the RAN based on the eDRX paging cycle longer than the cycle threshold; or second capability indication information, configured to determine that the base station supports monitoring the paging message of the RAN based on the eDRX paging cycle. In response to the eDRX paging cycle being longer than the cycle threshold, not receiving the first capability indication information and receiving the second capability indication information, the terminal determines that RAN paging monitoring may be performed based on the predetermined eDRX paging cycle. The predetermined eDRX paging cycle may be 10.24s.

In an embodiment, in response to configuring second capability indication information, the first capability indication information is configured, in which the first capability indication information indicates that the base station supports monitoring the paging message of the RAN based on the eDRX paging cycle longer than the cycle threshold; and the second capability indication information is configured to determine that the base station supports monitoring the paging message of the RAN based on the eDRX paging cycle.

In an embodiment, in response to configuring third capability indication information, the first capability indication information is configured, in which the first capability indication information indicates that the base station supports monitoring the paging message of the RAN based on the eDRX paging cycle longer than the cycle threshold; and the third capability indication information indicates that the base station supports monitoring the paging message of the CN using the eDRX paging cycle.

It needs to be noted that those skilled in the art may understand that the method in embodiments of the present disclosure may be executed alone, or together with some methods in embodiments of the present disclosure or some methods in the related art.

To better understand the embodiments of the present disclosure, the technical solution of the present disclosure is further illustrated via an exemplary embodiment below.

In an embodiment, in a working mode of the eDRX, the CN assigns a first eDRX parameter to the terminal, that is, an idle mode eDRX parameter or an eDRX parameter for CN paging or an eDRX configured by upper layer, and the base station assigns a second eDRX parameter to the terminal, that is, an inactive mode eDRX parameter or an eDRX for RAN paging or an eDRX configured by RAN.

In an embodiment, the base station explicitly indicates to the terminal whether it supports the idle mode eDRX (e.g., indicated by a first identifier) or the inactive mode eDRX (e.g., indicated by a second identifier, and the second identifier may be configured only when the first identifier is configured or enabled by a network). The identifier being configured or enabled by the network means that the network sends the identifier in a system information block (SIB)1 message.

In an example,
an indication of the first identifier or an indication of an idle mode eDRX (i.e., eDRX-AllowedIdle):
an existence of this field indicates that monitoring the paging message of the CN using the first eDRX parameter is allowed in a cell of the UE in RRC_IDLE or RRC_INACTIVE. If eDRX-AllowedIdle is not present, the UE shall stop using the first eDRX parameter for monitoring the paging message of the CN in RRC_IDLE or RRC_INACTIVE.
an indication of the second identifier or an indication of an inactive mode eDRX (i.e., eDRX-AllowedInactive):
   an existence of this field indicates that monitoring the paging message of the RAN using the second eDRX parameter is allowed in a cell of the UE in RRC_INACTIVE. If eDRX-AllowedInactive is not present, the UE shall stop using the second eDRX parameter for monitoring the paging message of the RAN in RRC_INACTIVE.

In an embodiment, a third identifier (corresponding to the first capability indication information in the present disclosure) is introduced to indicate a capability of the base station supporting the second eDRX paging cycle (corresponding to the second eDRX parameter in the present disclosure) exceeding a specific threshold.

In an embodiment, the second eDRX paging cycle corresponds to an inactive mode eDRX paging cycle parameter assigned by the base station.

In an embodiment, the third identifier notifies the terminal via a system message.

In an embodiment, if the third identifier is configured, it means that the base station supports the second eDRX paging cycle exceeding the specific threshold.

In an embodiment, a foundation that the third identifier is configured or enabled by the network is that the second identifier is configured or enabled by the network.

In an embodiment, a foundation that the third identifier is configured or enabled by the network is that the first identifier is configured or enabled by the network.

In an embodiment, if the base station assigns the second eDRX paging cycle exceeding the specific threshold to an inactive terminal and the base station configures the third identifier for the terminal, it is considered that the terminal is configured with the second eDRX paging cycle exceeding the specific threshold.

In an embodiment, if the inactive terminalis assigned with the second eDRX paging cycle exceeding the specific threshold by the base station and the base station configures the third identifier for the terminal, it is considered that the terminal is configured with T_{eDPX, RAN} which is set to be longer than 1024 radio frames.

In an embodiment, if the inactive terminalis assigned with the second eDRX paging cycle exceeding the specific threshold by the base station and the base station configures the third identifier for the terminal, it is considered that the terminal is configured to monitor RAN paging using a paging cycle in the second eDRX parameter exceeding the specific threshold (e.g., 1024 radio frames).

In an embodiment, if the inactive terminal is configured with the second eDRX paging cycle exceeding the specific threshold, a monitoring behavior of the terminal is as follows.

For example, CN paging within a PTW of the first eDRX parameter and RAN paging within a PTW of the second eDRX parameter are respectively monitored; and the CN paging and the RAN paging are simultaneously monitored within a time period where there is time domain overlapping between the PTW of the first eDRX parameter and the PTW of the second eDRX parameter.

In an embodiment, the situation where the base station does not assign the second eDRX paging cycle exceeding the specific threshold to the inactive terminal includes the situations where the second eDRX paging cycle configured by the network is less than or equal to the specific threshold, and/or the base station does not configure or enable the third identifier (any one of conditions is not met).

In an embodiment, for the inactive terminal, the second eDRX paging cycle configured by the network is a second eDRX paging cycle exceeding the specific threshold, but the base station does not configure or enable the third identifier (such as returning to a base station in version R17). In this case, fallback processing may be adopted. A simple method is that the second eDRX parameter is not used, that is, the second eDRX parameter is invalid (This method corresponds to working mode 1).

In an embodiment, if the configured second eDRX parameter is invalid, the terminal is only configured with the first eDRX parameter while the second eDRX parameter is not configured. That is, the paging message of the CN and the paging message of the RAN are monitored within the PTW of the first eDRX parameter, while the paging message of the RAN is monitored (in accordance with the RAN paging cycle) outside the PTW of the first eDRX parameter.

In an embodiment, if the terminal is assigned with an eDRX cycle longer than 10.24s by the base station and the network does not send the third identifier (such as returning to a base station in a version R17, so this function is not supported), it is determined that the terminal is not configured with the second eDRX paging cycle or the second eDRX paging cycle may not be used for monitoring the RAN paging.

In an embodiment, if the terminal is assigned with a cycle less than or equal to 10.24s and the network has sent the second identifier (regardless of whether the network has sent the third identifier), it is determined that the terminal is configured with the second eDRX paging cycle or the second eDRX paging cycle may be used for monitoring the RAN paging.

In an embodiment, for the inactive terminal, the second eDRX paging cycle configured by the network is a second eDRX paging cycle exceeding the specific threshold, and the network does not send the third identifier but sends the second identifier (such as returning to a base station in version R17). At this time, fallback processing may be adopted. Another method is that the terminal determines the second eDRX paging cycle (default cycle) is configured for the terminal or a default second eDRX paging cycle is used to monitor the RAN paging. (This method corresponds to working mode 2)

The default cycle may be agreed in a protocol, for example, 10.24s, or a value below 10.24s, such as 5.12s, etc.

In an embodiment of the working mode 1,
for the terminal, if the terminal is assigned with an eDRX cycle longer than 10.24s by the base station and the network has sent the third identifier (for example, named eDRX-AllowedInactivelongerthan10.24), it is determined that the terminal is configured with the second eDRX paging cycle exceeding a specific threshold or the RAN paging is monitored using the second eDRX paging cycle exceeding the specific threshold, or TeDRX, RAN is longer than 1024 radio frames. If the terminal is assigned with a cycle not longer than 10.24s and the network has sent the second identifier (for example, named eDRX-AllowedInactive), it is determined that the terminal is configured with the second eDRX paging cycle or the RAN paging is monitored using the second eDRX paging cycle. If the terminal is assigned with a cycle longer than 10.24s and the network does not send the third identifier, it is determined that the terminal is not configured with the second eDRX paging cycle or the second eDRX paging cycle may not be used for monitoring the RAN paging.

A corresponding description in the standard is as follows.

The UE may be configured by upper layers and/or RRC with an extended DRX (eDRX) cycle TeDRX, CN and/or TeDRX, RAN. The UE operates in eDRX for CN paging in RRC_IDLE or RRC_INACTIVE states if the UE is configured for eDRX by upper layers and eDRX-AllowedIdle is signalled in SIB1. The UE operates in eDRX for RAN paging in RRC_INACTIVE state if the UE is configured for eDRX no longer than 10.24s by RAN and eDRX-AllowedInactive is signalled in SIB1. The UE operates in eDRX for RAN paging longer than 10.24s in RRC_INACTIVE state if the UE is configured for eDRX longer than 10.24s by RAN and eDRX-AllowedInactivelongerthan10.24 is signalled in SIB1.

In an embodiment of the working mode 2,
for the terminal, if the terminal is assigned with a cycle longer than 10.24s by the base station and the network has sent the third identifier (for example, named eDRX-AllowedInactivelongerthan10.24), it is determined that the terminal is configured with the second eDRX paging cycle exceeding a specific threshold or the RAN paging is monitored using the second eDRX paging cycle exceeding the specific threshold, or TeDRX, RAN is longer than 1024 radio frames. If the terminal is assigned with a cycle not longer than 10.24s and the network does not send the third identifier but has sent the second identifier (for example, named eDRX-AllowedInactive), it is determined that the terminal is configured with the second eDRX paging cycle or the RAN paging is monitored using a default second eDRX paging cycle. At this time, the default second eDRX paging cycle is agreed in the protocol. If the terminal is assigned with a cycle not longer than 10.24s and the network has sent the second identifier, it is determined that the terminal is configured with the second eDRX paging cycle or the second eDRX paging cycle may be used for monitoring the RAN paging.

A corresponding description in the standard is as follows.

The UE may be configured by upper layers and/or RRC with an extended DRX (eDRX) cycle TeDRX, CN and/or TeDRX, RAN. The UE operates in eDRX for CN paging in RRC_IDLE or RRC_INACTIVE states if the UE is configured for eDRX by upper layers and eDRX-AllowedIdle is signalled in SIB1. The UE operates in eDRX for RAN paging in RRC_INACTIVE state if the UE is configured for eDRX no longer than 10.24s by RAN and eDRX-AllowedInactive is signalled in SIB1. The UE operates in eDRX for RAN paging for 10.24s in RRC_INACTIVE state if the UE is configured for eDRX longer than 10.24s by RAN and eDRX-AllowedInactive is signaled in SIB1 while eDRX-AllowedInactivelongerthan10.24 is not signalled in SIB1. The UE operates in eDRX for RAN paging longer than 10.24s in RRC_INACTIVE state if the UE is configured for eDRX longer than 10.24s by RAN and eDRX-AllowedInactivelongerthan10.24 is signalled in SIB1.

As shown in FIG. 11, the embodiments of the present disclosure provide a paging apparatus, including:
a determining module 111, configured to determine an operation mode for monitoring a paging message of an RAN based on a size of an eDRX paging cycle configured and a reception result of capability indication information,
in which the capability indication information includes at least one of: first capability indication information that indicates that a base station supports monitoring the paging message of the RAN based on an eDRX paging cycle longer than a cycle threshold; or second capability indication information that indicates that a base station supports monitoring the paging message of the RAN based on the eDRX paging cycle.

It needs to be noted that those skilled in the art may understand that the method in embodiments of the present disclosure may be executed alone, or together with some methods in embodiments of the present disclosure or some methods in the related art.

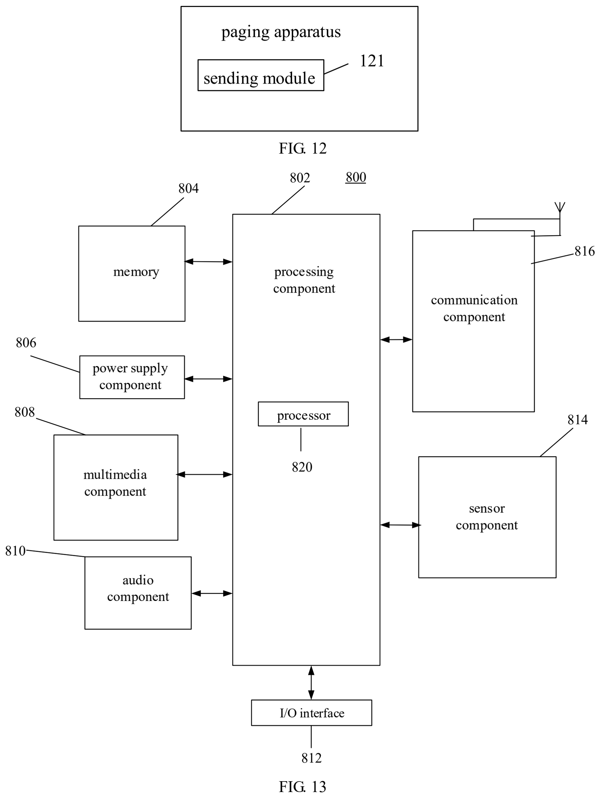

As shown in FIG. 12, the embodiments of the present disclosure provide a paging apparatus, including:
a sending module 121, configured to send first capability indication information to a terminal,
in which the first capability indication information indicates that a base station supports an eDRX paging cycle longer than a cycle threshold, and the eDRX paging cycle is a preset eDRX parameter configured by the base station for the terminal.

It needs to be noted that those skilled in the art may understand that the method in embodiments of the present disclosure may be executed alone, or together with some methods in embodiments of the present disclosure or some methods in the related art.

The embodiments of the present disclosure provide a communication device, including: a processor; and a memory for storing instructions executable by the processor, in which the processor is configured to implement the method in any one of the embodiments of the present disclosure when the executable instructions are executed.

The processor may include various types of storage media. The storage medium is a non-transitory computer storage medium that may continuously save and store information on the communication apparatus after the communication apparatus is powered off.

The processor may be connected to the memory via a bus, and the processor is configured to read executable programs stored on the memory.

The embodiments of the present disclosure also provide a computer storage medium, in which the computer storage medium stores a computer executable program. When the computer executable program is executed by a processor, the method according to any one of the embodiments of the present disclosure is implemented.

With respect to the apparatus in the above embodiments, specific implementations in which each module performs an operation has been described in detail in the method embodiments and will not be elaborated here.

As shown in FIG. 13, an embodiment of the present disclosure provides a structure of a terminal.

Referring to FIG. 13, the embodiments of the present disclosure provide a terminal 800, which may be a mobile phone, a computer, a digital broadcast terminal, a message sending and receiving device, a game console, a tablet device, a medical device, a fitness device, a personal digital assistant, etc.

Referring to FIG. 13, the terminal 800 may include one or more components of: a processing component 802, a memory 804, a power supply component 806, a multimedia component 808, an audio component 810, an input/output (I/O) interface 812, a sensor component 814, and a communication component 816.

The processing component 802 typically controls the overall operation of the terminal 800, such as those associated with an on screen display, a telephone call, a data communication, a camera operation, and a recording operation. The processing component 802 may include one or more processors 820 to execute instructions to generate all or part of steps of the above method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the terminal 800. Examples of these data include instructions of any application program or method used to operate on the terminal 800, contact data, phone book data, messages, pictures, videos, etc. The memory 804 may be implemented by any type of volatile or non-volatile memory or a combination of them, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply component 806 provides power to the various components of the terminal 800. The power supply component 806 may include a power management system, one or more power supplies, and other components associated with generating, managing, and distributing power for the terminal 800.

The multimedia component 808 includes a screen that provides an output interface between the terminal 800 and the user. In some embodiments, the screen may include a liquid crystal display (LCD) and a touch panel (TP). If the screen includes a TP, the screen may be a touch screen to receive signals input by the user. The touch panel includes one or more touch sensors to sense a touch, swiping, and gesture on the touch panel. The touch sensor may not only sense the boundary of a touch or sliding action, but also detect the duration and pressure associated with the touch or sliding operation. In some embodiments, the multimedia component 808 includes a front camera and/or a rear camera. When the terminal 800 is in an operating mode, such as a shooting mode or a video mode, the front camera and/or the rear camera may receive external multimedia data. Each of the front camera or the rear camera may be a fixed optical lens system or has a focal length and an optical zoom capability.

The audio component 810 is configured to output and/or input audio signals. For example, the audio component 810 includes a microphone (MIC) that is configured to receive external audio signals when the terminal 800 is in an operational mode, such as a call mode, a recording mode, and a speech recognition mode. The received audio signal may be further stored in the memory 804 or transmitted via a communication component 816. In some embodiments, the audio component 810 also includes a speaker for the output of an audio signal.

The I/O interface 812 provides an interface between the processing component 802 and a peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects of the terminal 800. For example, the sensor component 814 may detect an on/off state of the terminal 800, and a relative positioning of the component. For example, the component is a display and a keypad of the terminal 800, the sensor component 814 may also detect a change of the position of the terminal 800 or a change of one component of the terminal 800, detect a presence or an absence of a contact between the user and with the terminal 800, detect a direction of the terminal 800, or detect an acceleration/deceleration and detect a temperature change of the terminal 800. The sensor component 814 may include a proximity sensor configured to detect the presence of nearby objects without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the terminal 800 and other devices. The terminal 800 may access a wireless network based on a communication standard, such as WiFi, 2G or 3G, or a combination of them. In one exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components to perform the above methods.

In exemplary embodiments, a non-transitory computer readable storage medium including instructions is also provided, such as a memory 804 including instructions. The instructions may be executed by the processor 820 of the terminal 800 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

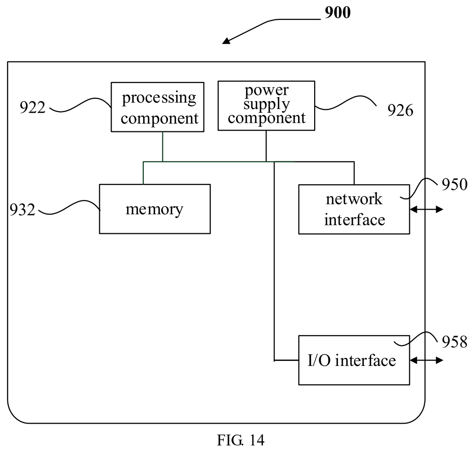

As shown in FIG. 14, the embodiments of the present disclosure provide a structure of a base station. For example, the base station 900 may be provided as a network-side device. Referring to FIG. 14, the base station 900 includes a processing component 922, which further includes one or more processors, and a memory resource represented by the memory 932 for storing instructions that may be executed by the processing component 922, such as an application program. The application program stored in the memory 932 may include one or more modules, in which each corresponds to a set of instructions. In addition, the processing component 922 is configured to execute instructions to implement any one of the above methods applied to the base station.

The base station 900 may also include a power supply component 926 configured to perform power management for the base station 900, a wired or wireless network interface 950 configured to connect the base station 900 to the network, and an I/O interface 958. The base station 900 may operate an operating system stored on the memory 932, such as a Windows Server^{™}, a Mac OS X^{™}, a Unix^{™}, a Linux^{™}, a FreeBSD^{™}, and so on.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein. It is intended that the specification and examples be considered as exemplary only, with a true scope and spirit of the present disclosure being indicated by the following claims.

It may be understood that the present disclosure is not limited to the precise structure described above and shown in attached drawings, and various modifications and alterations may be made without going beyond the scope of the present disclosure. Therefore, the protection scope of the disclosure shall be subject to claims.

## Claims

1. A paging method, performed by a terminal, comprising:
determining an operation mode for monitoring a paging message of a radio access network (RAN) based on a size of an extended discontinuous reception (eDRX) paging cycle configured and a reception result of capability indication information,
wherein the capability indication information comprises at least one of:
first capability indication information that indicates that a base station supports monitoring the paging message of the RAN based on an eDRX paging cycle longer than a cycle threshold; or
second capability indication information that indicates that a base station supports monitoring the paging message of the RAN based on the eDRX paging cycle.

2. The method of claim 1, further comprising:
receiving the first capability indication information sent by the base station.

3. The method of claim 2, wherein receiving the first capability indication information sent by the base station comprises:
receiving the first capability indication information sent by the base station via a system message.

4. The method of claim 1, wherein determining the operation mode for monitoring the paging message of the RAN based on the size of the eDRX paging cycle configured and the reception result of the capability indication information comprises at least one of:
in response to the eDRX paging cycle being longer than the cycle threshold and receiving the first capability indication information, determining that the terminal is enabled to perform RAN paging monitoring based on the eDRX paging cycle longer than the cycle threshold;
in response to the eDRX paging cycle being longer than the cycle threshold and not receiving the first capability indication information, determining that the terminal is not enabled to perform RAN paging monitoring based on the eDRX paging cycle;
in response to the eDRX paging cycle being less than or equal to the cycle threshold and receiving the second capability indication information, determining that the terminal is enabled to perform RAN paging monitoring based on the eDRX paging cycle; or
in response to the eDRX paging cycle being longer than the cycle threshold, not receiving the first capability indication information and receiving the second capability indication information, determining that the terminal is enabled to perform RAN paging monitoring based on a predetermined eDRX paging cycle.

5. A paging method, performed by a base station, comprising:
sending first capability indication information to a terminal,
wherein the first capability indication information indicates that the base station supports an extended discontinuous reception (eDRX) paging cycle longer than a cycle threshold, and the eDRX paging cycle is a preset eDRX parameter configured by the base station for the terminal.

6. The method of claim 5, wherein sending the first capability indication information to the terminal comprises:
sending the first capability indication information to the terminal via a system message.

7. The method of claim 5, further comprising:
in response to configuring second capability indication information, configuring the first capability indication information, wherein the second capability indication information indicates that the base station supports monitoring a paging message of a radio access network (RAN) using the eDRX paging cycle.

8. The method of claim 5, further comprising:
in response to configuring third capability indication information, configuring the first capability indication information, wherein the third capability indication information indicates that the base station supports monitoring a paging message of a core network (CN) using the eDRX paging cycle.

9. A paging apparatus, comprising:
a determining module, configured to determine an operation mode for monitoring a paging message of a radio access network (RAN) based on a size of an extended discontinuous reception (eDRX) paging cycle configured and a reception result of capability indication information,
wherein the capability indication information comprises at least one of:
first capability indication information that indicates that a base station supports monitoring the paging message of the RAN based on an eDRX paging cycle longer than a cycle threshold; or
second capability indication information that indicates that a base station supports monitoring the paging message of the RAN based on the eDRX paging cycle.

10. A paging apparatus, comprising:
a sending module, configured to send first capability indication information to a terminal,
wherein the first capability indication information indicates that a base station supports an extended discontinuous reception (eDRX) paging cycle longer than a cycle threshold, and the eDRX paging cycle is a preset eDRX parameter configured by the base station for the terminal.

11. A communication device, comprising:
an antenna;
a memory; and
a processor connected to the antenna and the memory respectively, configured to control transmission and reception of the antenna by executing computer-executable instructions stored in the memory, and to implement the method of any one of claims 1 to 4 or 5 to 8.

12. A computer storage medium for storing computer-executable instructions, wherein when the computer-executable instructions are executed by a processor, the method of any one of claims 1 to 4 or 5 to 8 is implemented.
